# EUROPEAN PATENT APPLICATION

(11) **EP 4 516 991 A1**
(43) Date of publication of application: **05.03.2025**
(21) Application number: 24197350.2
(22) Date of filing: 29.08.2024
(51) Int. Cl.: D21B 1/06, D21B 1/08, D21B 1/34, D21F 9/00

(54) **CRUSHED PIECE SUPPLY DEVICE AND FIBER STRUCTURE MANUFACTURING APPARATUS**

(30) Priority: 31.08.2023 JP 2023140926
(71) Applicant: Seiko Epson Corporation, Tokyo 160-8801 (JP)
(72) Inventor: SAKURADA, Jun, Sakata-shi, 998-0194 (JP); SATO, Makoto, Suwa-shi, 392-8502 (JP); MOTOHASHI, Koji, Suwa-shi, 392-8502 (JP); HASEBE, Karen, Suwa-shi, 392-8502 (JP); ABE, Takashi, Sakata-shi, 998-0194 (JP)
(74) Representative: Lewis Silkin LLP

(57) **Abstract**

There is provided a crushed piece supply device including a storage tank that stores a crushed piece containing a fiber, a partition portion that partitions an inside of the storage tank into a first space and a second space positioned below the first space by narrowing the inside of the storage tank, an adjusting section that adjusts a moving amount of the crushed piece moving from the first space to the second space, a stirring section that stirs the crushed piece in the second space, and a discharge port through which the crushed piece is discharged from the second space.

## Description

The present application is based on, and claims priority from JP Application Serial Number 2023-140926, filed August 31, 2023, the disclosure of which is hereby incorporated by reference herein in its entirety.

### BACKGROUND

### 1. Technical Field

The present disclosure relates to a crushed piece supply device and a fiber structure manufacturing apparatus.

### 2. Related Art

A fiber structure manufacturing apparatus including a crushing section that crushes waste paper, a storing section that stores a crushed piece obtained by the crushing section, a defibrating section that defibrates the crushed piece discharged from the storing section, an accumulating section that accumulates, on a flat surface, a defibrated material obtained by the defibrating section, a heating and pressurizing section that heats and pressurizes an accumulated web, a cutting section that cuts a sheet obtained by the heating and pressurizing section into a predetermined shape, and a sheet collection section that collects an obtained sheet is known.

Examples of the storing section include a storing section described in JP-A-2012-7246. The storing section described in JP-A-2012-7246 includes a storage tank that stores a crushed piece and a humidifier that humidifies the crushed piece in the storage tank.

However, in the configuration described in JP-A-2012-7246, there is a problem in that the stirring of the crushed piece is insufficient or uneven.

### SUMMARY

According to an aspect of the present disclosure, there is provided a crushed piece supply device including a storage tank that stores a crushed piece containing a fiber and that has a first space and a second space positioned below the first space therein, an introduction port that communicates with the first space and through which the crushed piece is introduced into the first space, a partition portion that partitions an inside of the storage tank into the first space and the second space and that has a communication port which makes the first space and the second space communicate with each other, an adjusting section that adjusts a moving amount of the crushed piece moving from the first space to the second space via the communication port, a stirring section that stirs the crushed piece in the second space, and a discharge port through which the crushed piece stirred by the stirring section is discharged from the second space.

According to another aspect of the present disclosure, there is provided a fiber structure manufacturing apparatus including the crushed piece supply device of the present disclosure, a defibrating section that defibrates the crushed piece supplied from the crushed piece supply device to generate a defibrated material, an accumulating section that accumulates the defibrated material to generate an accumulated material, and a molding section that molds the accumulated material.

### BRIEF DESCRIPTION OF THE DRAWINGS

FIG. 1 is a configuration view showing an outline of a fiber structure manufacturing apparatus including a crushed piece supply device according to an embodiment of the present disclosure.
FIG. 2 is a vertical sectional view of the crushed piece supply device shown in FIG. 1.
FIG. 3 is a cross-sectional view taken along line III-III in FIG. 2.
FIG. 4 is a cross-sectional view taken along line IV-IV in FIG. 2.
FIG. 5 is an enlarged cross-sectional view of a stirring member and a shaft in FIG. 2.
FIG. 6 is a perspective view of the stirring member in FIG. 2.

### DESCRIPTION OF EMBODIMENTS

Hereinafter, a crushed piece supply device and a fiber structure manufacturing apparatus of the present disclosure will be described in detail based on a preferred embodiment shown in the accompanying drawings.

### Embodiment

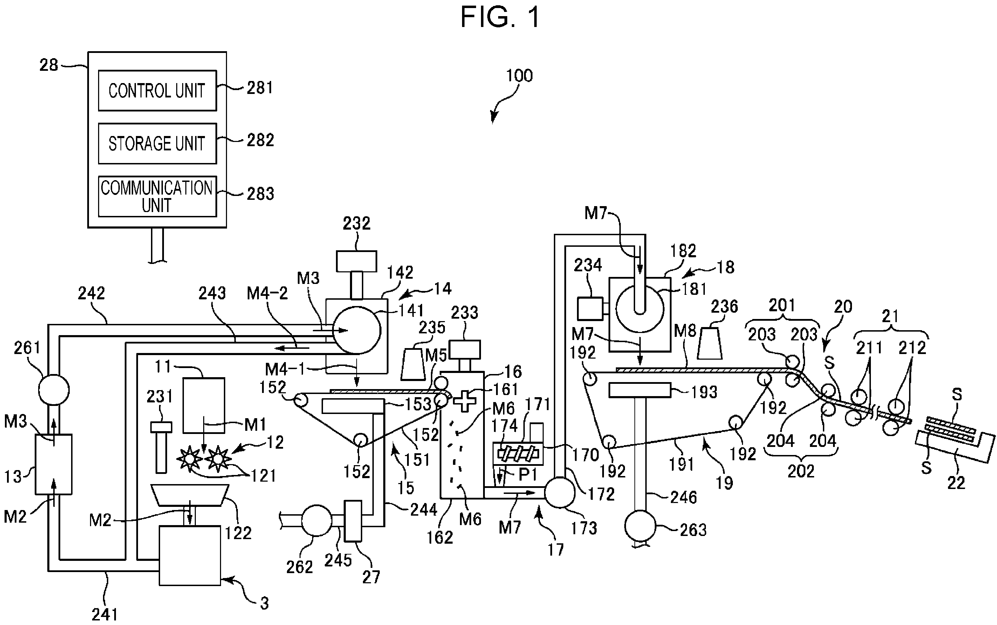

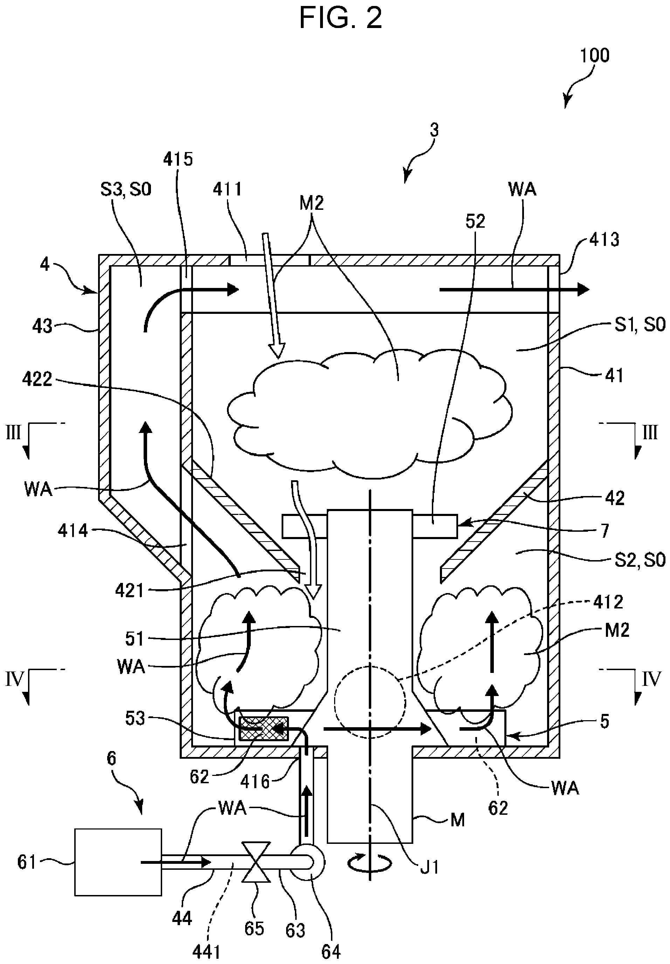

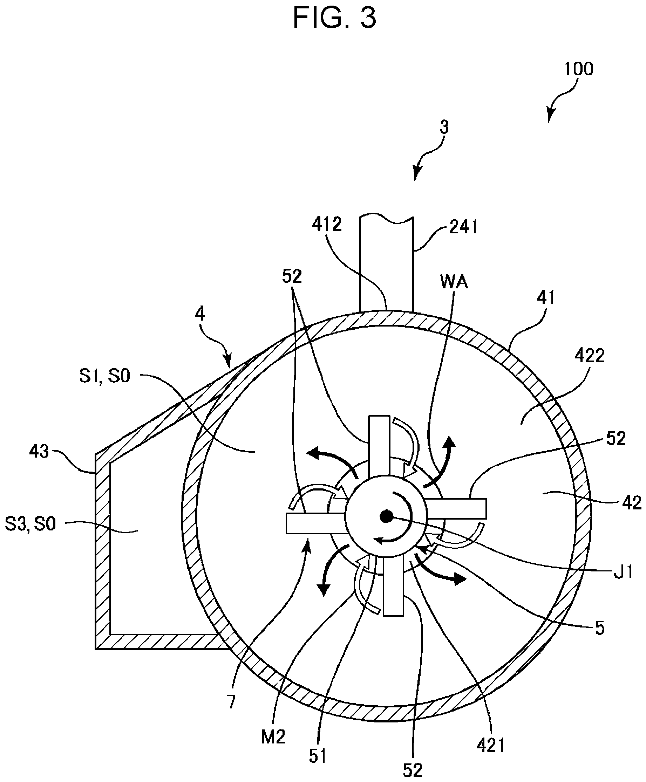

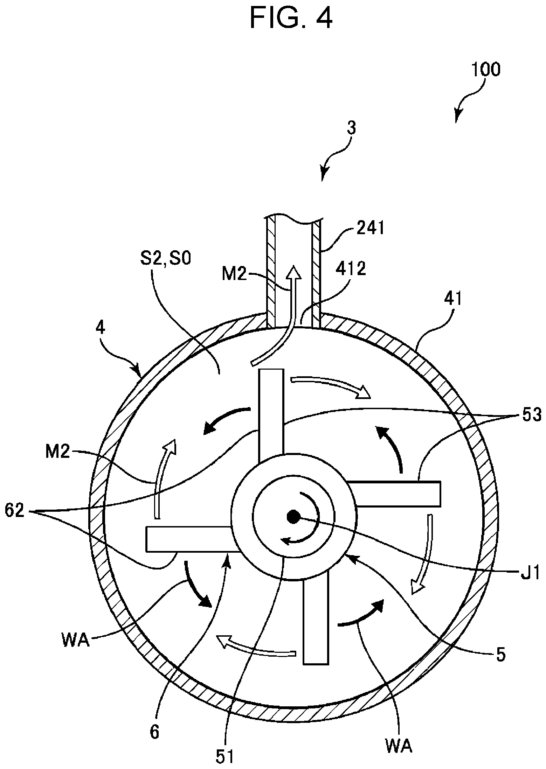

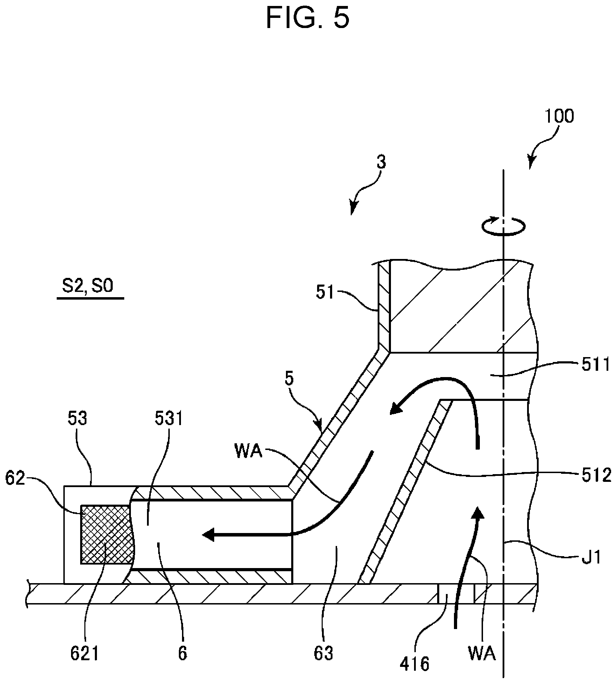

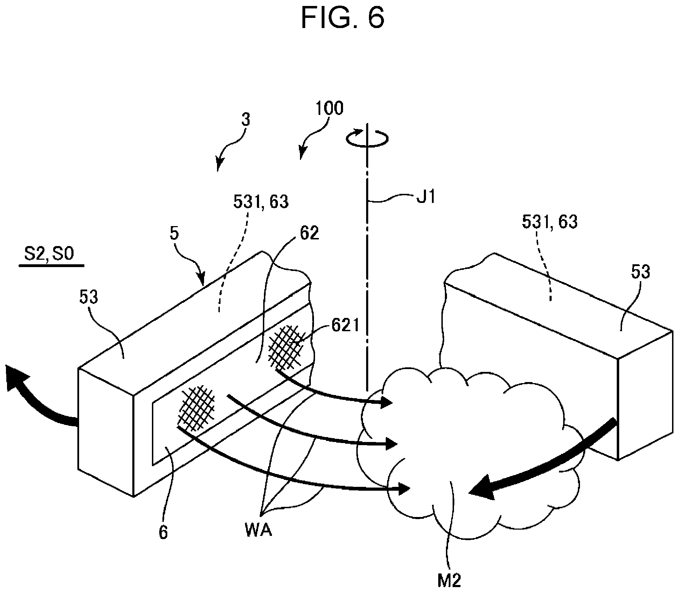

FIG. 1 is a configuration view showing an outline of the fiber structure manufacturing apparatus including the crushed piece supply device according to an embodiment of the present disclosure. FIG. 2 is a vertical sectional view of the crushed piece supply device shown in FIG. 1. FIG. 3 is a cross-sectional view taken along line III-III in FIG. 2. FIG. 4 is a cross-sectional view taken along line IV-IV in FIG. 2. FIG. 5 is an enlarged cross-sectional view of a stirring member and a shaft in FIG. 2. FIG. 6 is a perspective view of the stirring member in FIG. 2.

Hereinafter, in FIGS. 1, 2, 5, and 6, in some cases, an upper side will be referred to as "upper" or "upward", and a lower side will be referred to as "lower" or "downward". In addition, in some cases, a left side of FIG. 2 will be referred to as "left" or "left side", and a right side thereof will be referred to as "right" or "right side". In addition, FIG. 1 is a schematic configuration view, and the positional relationship, the direction, the size, and the like of each section of a fiber structure manufacturing apparatus 100 are not limited to those shown. In addition, in FIG. 1, a direction in which a crushed piece M2, a defibrated material M3, a first sorted material M4-1, a second sorted material M4-2, a first web M5, a subdivided body M6, a mixture M7, a second web M8, and a sheet S are transported, that is, a direction indicated by an arrow is also referred to as a transport direction. In addition, a tip side of the arrow in FIG. 1 is also referred to as "downstream" in the transport direction, and a base end side of the arrow in FIG. 1 is also referred to as "upstream" in the transport direction.

The fiber structure manufacturing apparatus 100 shown in FIG. 1 is, for example, the fiber structure manufacturing apparatus 100 that generates the sheet S, which is an example of a fiber structure, from a raw material M1, which is waste paper such as used copy paper. The fiber structure manufactured by the fiber structure manufacturing apparatus 100 is not limited to the sheet S and may have a block shape.

As shown in FIG. 1, the fiber structure manufacturing apparatus 100 includes a raw material supply section 11, a crushing section 12, a crushed piece supply device 3 which is an example of the crushed piece supply device of the present disclosure, a defibrating device 13, a sorting section 14, a first web forming section 15, a subdividing section 16, a mixing section 17, a dispersion section 18, a second web forming section 19, a molding section 20, a severing section 21, a stock section 22, and a collection section 27.

In addition, the fiber structure manufacturing apparatus 100 includes a humidifying section 231, a humidifying section 232, a humidifying section 233, a humidifying section 234, a humidifying section 235, and a humidifying section 236. In addition, the fiber structure manufacturing apparatus 100 includes a blower 261, a blower 262, and a blower 263.

In addition, in the fiber structure manufacturing apparatus 100, a raw material supply step, a crushing step, a crushed piece supply step, a defibration step, a sorting step, a first web forming step, a division step, a mixing step, a loosening step, a second web forming step, a sheet forming step, and a severing step are performed in this order.

Hereinafter, a configuration of each section will be described.

The raw material supply section 11 is a portion that performs the raw material supply step of supplying the raw material M1 to the crushing section 12. The raw material M1 is a sheet-like material made of a fiber-containing material containing cellulose fibers. The cellulose fiber may be a fibrous material containing cellulose, which is a compound, as a main component, and may contain hemicellulose and lignin in addition to the cellulose. In addition, the raw material M1 may be in any form, such as woven fabric and non-woven fabric. In addition, the raw material M1 may be, for example, recycled paper regenerated and manufactured by defibrating waste paper or YUPO paper (registered trademark) that is synthetic paper, or need not be recycled paper.

The crushing section 12 is a portion that performs the crushing step of crushing, in the air such as in the atmosphere, the raw material M1 supplied from the raw material supply section 11. The crushing section 12 has a pair of crushing blades 121 and a chute 122.

By rotating the pair of crushing blades 121 in opposite directions to each other, the raw material M1 can be crushed therebetween, that is, cut into the crushed pieces M2. It is preferable that the shape and the size of the crushed piece M2 are suitable for defibration processing in the defibrating device 13. Examples of the shape of the crushed piece M2 include a small piece having a square planar shape and a small piece having a rectangular shape, particularly a strip shape. In addition, the size of the crushed piece M2 is preferably, for example, a small piece of which one side has an average length of 100 mm or less and more preferably 3 mm or more and 70 mm or less. The shape of the small piece may be other than a square shape or a rectangular shape. In addition, it is preferable that the thickness is 0.07 mm or more and 0.10 mm or less.

The chute 122 is disposed below the pair of crushing blades 121 and has, for example, a conical shape or a funnel shape. Accordingly, the chute 122 can receive the crushed piece M2 that is crushed by the crushing blades 121 and is fallen.

In addition, above the chute 122, the humidifying section 231 is disposed adjacent to the pair of crushing blades 121. The humidifying section 231 humidifies the crushed piece M2 in the chute 122. The humidifying section 231 is configured as a vaporization type humidifier that has a filter (not shown) containing moisture and that supplies humidified air with an increased humidity to the crushed piece M2 by passing air through the filter. By supplying the humidified air to the crushed piece M2, adhesion of the crushed piece M2 to the chute 122 or the like caused by an electrostatic force can be suppressed.

The chute 122 is coupled to the crushed piece supply device 3. The crushed piece M2 gathered by the chute 122 is sent and temporarily stored in the crushed piece supply device 3 and is supplied from the crushed piece supply device 3 to the defibrating device 13. The crushed piece supply device 3 performs the crushed piece supply step and supplies the crushed piece M2 to the defibrating device 13 as the crushed piece M2 is humidified. The crushed piece supply device 3 will be described in detail later.

As shown in FIG. 1, the defibrating device 13 is a portion that performs the defibration step of defibrating the crushed piece M2 in the air, that is, through a dry method. By performing the defibration processing in the defibrating device 13, the defibrated material M3 can be generated from the crushed piece M2. Herein, "defibrating" refers to unraveling the crushed piece M2, which is formed by binding a plurality of fibers, into each strand of the fibers. Then, the unraveled material becomes the defibrated material M3. The shape of the defibrated material M3 is a linear shape or a belt shape. In addition, the defibrated materials M3 may be in a state of being intertwined with each other in a lump shape, that is, in a state of forming a so-called "lump".

In addition, the defibrating device 13 can generate a flow of air from the crushed piece supply device 3 toward the sorting section 14, that is, an air flow, by the rotation of a rotor (not shown). Accordingly, the crushed piece M2 can be introduced upstream of the defibrating device 13 from a pipe 241, and after the defibration processing, the defibrated material M3 can be delivered to the sorting section 14 through a pipe 242.

The pipe 242 is coupled downstream to the defibrating device 13. The blower 261 configured as, for example, a turbo type fan is installed in the middle of the pipe 242. The blower 261 is an air flow generation device that generates an air flow toward the sorting section 14. Accordingly, the introduction of the crushed piece M2 into the defibrating device 13 and the delivery of the defibrated material M3 to the sorting section 14 are promoted. Due to the structure of the defibrating device 13, passage and the defibration processing of the crushed piece M2, which is the raw material, are smoothly performed. In addition, by the operation of the blower 261 installed downstream of the defibrating device 13, the passage and the defibration processing of the crushed piece M2 in the defibrating device 13 are promoted. The blower 261 may be installed upstream of the defibrating device 13.

The sorting section 14 is a portion that performs the sorting step of sorting the defibrated material M3 according to the size of a fiber length. In the sorting section 14, the defibrated material M3 is sorted into the first sorted material M4-1 and the second sorted material M4-2 having a fiber length larger than that of the first sorted material M4-1. The first sorted material M4-1 has a size suitable for the subsequent manufacture of the sheet S. On the other hand, the second sorted material M4-2 includes, for example, a material insufficiently defibrated and a material in which defibrated fibers are excessively aggregated.

The sorting section 14 has a drum portion 141 and a housing portion 142 that houses the drum portion 141.

The drum portion 141 is configured as a cylindrical net body and is a sieve that rotates around a central axis thereof. The defibrated material M3 flows into the drum portion 141. Then, as the drum portion 141 rotates, the defibrated material M3 smaller than a mesh opening of the net is sorted as the first sorted material M4-1, and the defibrated material M3 having a size equal to or larger than the mesh opening of the net is sorted as the second sorted material M4-2.

The first sorted material M4-1 falls from the drum portion 141.

On the other hand, the second sorted material M4-2 is delivered to a pipe 243 coupled to the drum portion 141. An end portion of the pipe 243 on the opposite side, that is, downstream of the drum portion 141 is coupled to the middle of the pipe 241. The second sorted material M4-2 that has passed through the pipe 243 joins the crushed piece M2 in the pipe 241 and flows into the defibrating device 13 together with the crushed piece M2. Accordingly, the second sorted material M4-2 is returned to the defibrating device 13 and is subjected to the defibration processing together with the crushed piece M2.

In addition, the first sorted material M4-1 that has fallen from the drum portion 141 falls as being dispersed in the air and heads toward the first web forming section 15 positioned below the drum portion 141. The first web forming section 15 is a portion that performs the first web forming step of forming the first web M5 with the first sorted material M4-1. The first web forming section 15 has a mesh belt 151, three tension rollers 152, and a suction section 153.

The mesh belt 151 is an endless belt, and the first sorted material M4-1 is accumulated thereon. The mesh belt 151 is hung around the three tension rollers 152. Then, the first sorted material M4-1 on the mesh belt 151 is transported downstream by the rotational drive of the tension rollers 152.

The first sorted material M4-1 has a size equal to or larger than the mesh opening of the mesh belt 151. Accordingly, the first sorted material M4-1 is restricted from passing through the mesh belt 151, and thereby can be accumulated on the mesh belt 151. In addition, the first sorted material M4-1 is transported downstream together with the mesh belt 151 as being accumulated on the mesh belt 151, so that the first sorted material M4-1 is formed as the layered first web M5.

In addition, there is a concern that dust, dirt, or the like is mixed in the first sorted material M4-1. The dust or the dirt is generated by, for example, crushing or defibrating in some cases. Then, such dust or dirt is collected in the collection section 27 to be described later.

The suction section 153 is a suction mechanism that sucks air from below the mesh belt 151. Accordingly, dust or dirt that has passed through the mesh belt 151 can be sucked together with air.

In addition, the suction section 153 is coupled to the collection section 27 via a pipe 244. Dust or dirt sucked by the suction section 153 is collected in the collection section 27.

A pipe 245 is further coupled to the collection section 27. In addition, the blower 262 is installed in the middle of the pipe 245. By the operation of the blower 262, a suction force can be generated in the suction section 153. Accordingly, the formation of the first web M5 on the mesh belt 151 is promoted. The dust, the dirt, or the like is removed from the first web M5. In addition, the dust or the dirt passes through the pipe 244 and reaches the collection section 27 by the operation of the blower 262.

The housing portion 142 is coupled to the humidifying section 232. The humidifying section 232 is configured as a vaporization type humidifier. Accordingly, humidified air is supplied into the housing portion 142. The first sorted material M4-1 can be humidified with the humidified air, and thereby adhesion of the first sorted material M4-1 to an inner wall of the housing portion 142 caused by an electrostatic force can also be suppressed.

The humidifying section 235 is disposed downstream of the sorting section 14. The humidifying section 235 is configured as an ultrasonic humidifier that sprays water. Accordingly, moisture can be supplied to the first web M5, and thereby the amount of moisture of the first web M5 is adjusted. By this adjustment, the adsorption of the first web M5 to the mesh belt 151 caused by an electrostatic force can be suppressed. Accordingly, the first web M5 is easily peeled off from the mesh belt 151 at a position where the mesh belt 151 is folded back by the tension rollers 152.

The subdividing section 16 is disposed downstream of the humidifying section 235. The subdividing section 16 is a portion that performs the division step of dividing the first web M5 peeled off from the mesh belt 151. The subdividing section 16 has a propeller 161 that is rotatably supported and a housing portion 162 that houses the propeller 161. The first web M5 can be divided by the rotating propeller 161. The divided first web M5 is the subdivided body M6. In addition, the subdivided body M6 descends in the housing portion 162.

The housing portion 162 is coupled to the humidifying section 233. The humidifying section 233 is configured as a vaporization type humidifier. Accordingly, humidified air is supplied into the housing portion 162. The humidified air can also suppress adhesion of the subdivided body M6 to the propeller 161 or an inner wall of the housing portion 162 caused by an electrostatic force.

The mixing section 17 is disposed downstream of the subdividing section 16. The mixing section 17 is a portion that performs the mixing step of mixing the subdivided body M6 and an additive. The mixing section 17 has an additive supply section 171, a pipe 172, and a blower 173.

The pipe 172 is a flow passage that couples the housing portion 162 of the subdividing section 16 to a housing 182 of the dispersion section 18 and through which the mixture M7 of the subdivided bodies M6 and the additive passes.

The additive supply section 171 is coupled to the middle of the pipe 172. The additive supply section 171 has a housing portion 170 that accommodates an additive and a screw feeder 174 that is provided in the housing portion 170. By the rotation of the screw feeder 174, the additive in the housing portion 170 is pushed out from the housing portion 170 and is supplied into the pipe 172. The additive supplied into the pipe 172 is mixed with the subdivided body M6 to become the mixture M7.

Herein, examples of the additive supplied from the additive supply section 171 include a binder for binding fibers to each other, a coloring agent for coloring fibers, an agglomeration inhibitor for suppressing fiber agglomeration, a flame retardant for making fibers and the like unlikely to burn, and a paper strength enhancing agent for enhancing a paper strength of the sheet S, and one type or a plurality of types of additives, among these, can be used in combination. Hereinafter, for example, a case where the additive is a binder P1 will be described. The additive includes a binder that binds fibers to each other, so that the strength of the sheet S can be increased.

Examples of the binder P1 include natural product-derived components, such as starch, dextrin, glycogen, amylose, hyaluronic acid, kudzu, konjac, potato starch, etherified starch, esterified starch, natural gum paste, fiber-inducing paste, seaweed, and animal protein, polyvinyl alcohol, polyacrylic acid, and polyacrylamide, and one type or two or more types selected from these can be used in combination. However, the natural product-derived components are preferable, and starch is more preferable. In addition, for example, thermoplastic resins, such as various types of polyolefins, acrylic resins, polyvinyl chloride, polyesters, and polyamides, and various types of thermoplastic elastomers can also be used.

In addition, in the middle of the pipe 172, the blower 173 is installed downstream of the additive supply section 171. The action of a rotating portion such as a blade of the blower 173 promotes mixing of the subdivided body M6 and the binder P1. In addition, the blower 173 can generate an air flow toward the dispersion section 18. The subdivided body M6 and the binder P1 can be stirred in the pipe 172 by this air flow. Accordingly, in a state where the subdivided body M6 and the binder P1 are uniformly dispersed, the mixture M7 is transported to the dispersion section 18. In addition, the subdivided body M6 in the mixture M7 is loosened in the process of passing through the pipe 172 to be in a finer fibrous form.

The blower 173 is electrically coupled to a control device 28, and the operation thereof is controlled. In addition, by adjusting the air blowing amount of the blower 173, the amount of air sent into a drum 181 can be adjusted.

Although not shown, an end portion of the pipe 172 on a drum 181 side is bifurcated, and each of the bifurcated end portions is coupled to an introduction port (not shown) formed in an end surface of the drum 181.

The dispersion section 18 shown in FIG. 1 is a portion that performs the loosening step of loosening and releasing fibers that are intertwined with each other in the mixture M7. The dispersion section 18 has the drum 181 that introduces and releases the mixture M7, which is the defibrated material, and the housing 182 that houses the drum 181.

The drum 181 is configured as a cylindrical net body and is a sieve that rotates around a central axis thereof. As the drum 181 rotates, fibers or the like of the mixture M7, which are smaller than the mesh opening of the net, can pass through the drum 181. At that time, the mixture M7 is loosened and released together with air. That is, the drum 181 functions as a release section that releases a material containing fibers.

The drum 181 is coupled to a driving source (not shown) and rotates with a rotational force output from the driving source. The driving source is electrically coupled to the control device 28, and the operation thereof is controlled.

In addition, the housing 182 is coupled to the humidifying section 234. The humidifying section 234 is configured as a vaporization type humidifier. Accordingly, humidified air is supplied into the housing 182. The inside of the housing 182 can be humidified with the humidified air, and thus adhesion of the mixture M7 to the inner wall of the housing 182 caused by an electrostatic force can be suppressed.

In addition, the mixture M7 released from the drum 181 falls as being dispersed in the air and heads toward the second web forming section 19 positioned below the drum 181. The second web forming section 19 is a portion that performs the second web forming step of accumulating the mixture M7 to form the second web M8 which is an accumulated material. The second web forming section 19 has a mesh belt 191, a tension roller 192, and a suction section 193.

The mesh belt 191 is a mesh member and in the shown configuration, is configured as an endless belt. In addition, the mixture M7 dispersed and released by the dispersion section 18 is accumulated on the mesh belt 191. The mesh belt 191 is hung around the four tension rollers 192. Then, the mixture M7 on the mesh belt 191 is transported downstream by the rotational drive of the tension rollers 192.

As the shown configuration, a configuration where the mesh belt 191 is used as an example of the mesh member is adopted, but the present disclosure is not limited thereto, and for example, a flat plate shape may be used.

In addition, most of the mixture M7 on the mesh belt 191 has a size equal to or larger than the mesh opening of the mesh belt 191. Accordingly, the mixture M7 is restricted from passing through the mesh belt 191 and thereby can be accumulated on the mesh belt 191. In addition, the mixture M7 is transported downstream together with the mesh belt 191 as being accumulated on the mesh belt 191, so that the layered mixture M7 is formed as the layered second web M8.

The suction section 193 is a suction mechanism that sucks air from below the mesh belt 191. Accordingly, the mixture M7 can be sucked onto the mesh belt 191, and thereby the accumulation of the mixture M7 on the mesh belt 191 is promoted.

A pipe 246 is coupled to the suction section 193. In addition, the blower 263 is installed in the middle of the pipe 246. By the operation of the blower 263, a suction force can be generated in the suction section 193.

The humidifying section 236 is disposed downstream of the dispersion section 18. The humidifying section 236 is configured as an ultrasonic humidifier, like the humidifying section 235. Accordingly, moisture can be supplied to the second web M8, and thereby the amount of moisture of the second web M8 is adjusted. By this adjustment, the adsorption of the second web M8 to the mesh belt 191 caused by an electrostatic force can be suppressed. Accordingly, the second web M8 is easily peeled off from the mesh belt 191 at a position where the mesh belt 191 is folded back by the tension rollers 192.

The total amount of moisture added to the humidifying section 231 to the humidifying section 236 is, for example, preferably 0.5 parts by mass or more and 20 parts by mass or less with respect to 100 parts by mass of a material before humidification.

The molding section 20 is disposed downstream of the second web forming section 19. The molding section 20 is a portion that performs the sheet forming step of forming the sheet S from the second web M8. The molding section 20 has a pressurization section 201 and a heating section 202.

The pressurization section 201 has a pair of calender rollers 203 and can pressurize the second web M8 between the calender rollers 203 without heating the second web M8. Accordingly, the density of the second web M8 is increased. The degree of heating in the case of heating is preferably a degree that the binder P1 is not melted, for example. Then, the second web M8 is transported toward the heating section 202. One of the pair of calender rollers 203 is a main roller driven by the operation of a motor (not shown), and the other is a driven roller.

The heating section 202 has a pair of heating rollers 204 and can pressurize the second web M8 during heating the second web M8 between the heating rollers 204. By this heating and pressurization, the binder P1 is melted in the second web M8, and fibers are bound to each other via the melted binder P1. Accordingly, the sheet S is formed. Then, the sheet S is transported toward the severing section 21. One of the pair of heating rollers 204 is a main roller driven by the operation of a motor (not shown), and the other is a driven roller.

The severing section 21 is disposed downstream of the molding section 20. The severing section 21 is a portion that performs the severing step of severing the sheet S. The severing section 21 has a first cutter 211 and a second cutter 212.

The first cutter 211 severs the sheet S in a direction intersecting the transport direction of the sheet S, particularly a direction orthogonal to the transport direction.

The second cutter 212 is located downstream of the first cutter 211 and severs the sheet S in a direction parallel to the transport direction of the sheet S. This severing is for removing unnecessary portions of both side end portions of the sheet S in a width direction to adjust the width of the sheet S.

Through such severing with the first cutter 211 and the second cutter 212, the sheet S having a desired shape and a desired size is obtained. Then, the sheet S is transported further downstream and is accumulated in the stock section 22.

Each section included in such a fiber structure manufacturing apparatus 100 is electrically coupled to the control device 28. The operation of each of these sections is controlled by the control device 28.

As shown in FIG. 1, the control device 28 includes a control section 281, a storage section 282, and a communication section 283.

The control section 281 has at least one processor and executes various types of programs stored in the storage section 282. As the processor, for example, a central processing unit (CPU) can be used. In addition, the control section 281 has various functions including a function of controlling the drive of each part of a device related to sheet manufacturing, such as a function of controlling the drive of the blower 261, and a drive control of a motor M to be described later, in the fiber structure manufacturing apparatus 100.

For example, a program related to sheet manufacturing or the like is stored in the storage section 282. Regarding the refining of a raw material by the defibrating device 13, a program related to operation sequence including conditions such as operation timings and rotation speeds of the blower 261 and the motor M is stored.

The communication section 283 is configured as, for example, an I/O interface and communicates with each section of the fiber structure manufacturing apparatus 100. In addition, the communication section 283 has a function of communicating with a computer or a server (not shown) via a network, for example.

The control device 28 may be built in the fiber structure manufacturing apparatus 100 or may be provided in an external device such as an external computer. In addition, for example, the control section 281 and the storage section 282 may be integrated and configured as one section, the control section 281 may be built in the fiber structure manufacturing apparatus 100 and the storage section 282 may be provided in an external device such as an external computer, or the storage section 282 may be built in the fiber structure manufacturing apparatus 100 and the control section 281 may be provided in an external device such as an external computer.

Next, a configuration of the crushed piece supply device 3 will be described.

As shown in FIG. 2, the crushed piece supply device 3 includes a storing section 4 that stores the crushed piece M2, a stirring section 5 that stirs the crushed piece M2 in the storing section 4, a humidifying section 6 that humidifies the crushed piece M2 in the storing section 4, and an adjusting section 7.

The storing section 4 has a storage tank 41, a partition portion 42, and a flow passage forming member 43.

The storage tank 41 is a tank that temporarily stores the crushed piece M2 in an internal space S0 and has an introduction port 411, a discharge port 412, and an exhaust port 413. The introduction port 411 is formed in a top surface of an upper portion of the storage tank 41, the discharge port 412 is formed in a bottom portion of the storage tank 41, and the exhaust port 413 is formed in a side surface of the upper portion of the storage tank 41.

The storage tank 41 has a bottomed cylindrical shape. However, the disclosure is not limited to this configuration and may be any shape such as a square tube shape.

The introduction port 411 is an opening provided to communicate with the internal space S0 of the storage tank 41 and is coupled to the chute 122 shown in FIG. 1. The crushed piece M2 gathered by the chute 122 is introduced into the internal space S0 via the introduction port 411.

The internal space S0 has a first space S1, a second space S2, and a humidified air exhaust space S3. The first space S1 is positioned above the second space S2. The crushed piece M2 introduced via the introduction port 411 is first supplied to the first space S1, is temporarily stored therein, and is further transferred to the second space S2. The first space S1 and the second space S2 are partitioned with the partition portion 42 to be described later.

The discharge port 412 is provided in the bottom portion of the storage tank 41, that is, a side surface of a lower portion of the storage tank 41. The crushed piece M2 in the second space S2 is discharged from the discharge port 412 as being stirred by the operation of the stirring section 5 to be described later. The pipe 241 is coupled to the discharge port 412, and the crushed piece M2 discharged from the discharge port 412 is supplied to the defibrating device 13 shown in FIG. 1 via the pipe 241 and is defibrated.

The discharge port 412 is provided in the bottom portion of the storage tank 41. Accordingly, the crushed piece M2 can be efficiently discharged from the discharge port 412 as being stirred.

The discharge port 412 may be provided in a bottom surface of the storage tank 41 or may be provided at another position.

The partition portion 42 is configured as a member having a conical or funnel-shaped hole of which an inner diameter decreases as going downward. That is, the partition portion 42 has a communication port 421 below. A shaft 51 to be described later is inserted into the communication port 421 without contact. An edge portion of the communication port 421 and the shaft 51 are separated from each other by a predetermined distance. Therefore, the crushed piece M2 can be moved from the first space S1 to the second space S2 via the communication port 421 by the rotation of a first stirring member 52 to be described later.

In addition, as shown in FIG. 2, the partition portion 42 has an inclined surface 422 positioned on a first space S1 side. The inclined surface 422 is inclined such that the communication port 421 is at the bottom. Specifically, the inclined surface 422 has a shape along the shape of an upper surface of the partition portion 42 and has, for example, a conical shape or a funnel shape surrounding the entire circumference of an outer circumferential portion of the communication port 421. By having such an inclined surface 422, the crushed piece M2 in the first space S1 can be smoothly guided to the communication port 421 and can be moved to the second space S2.

The shape of the inclined surface 422 is not limited to the above and may be, for example, a pyramidal shape surrounding the entire circumference of the outer circumferential portion of the communication port 421, or the inclined surface 422 may be a pair of inclined flat surfaces disposed each on the right and left of the shaft 51.

An average inclination angle of the inclined surface 422 is not particularly limited and is preferably 15° or more and 80° or less and more preferably 25° or more and 70° or less with respect to a central axis J1 of the rotation of the shaft 51. With such a range, the crushed piece M2 can be more smoothly guided to the communication port 421.

The partition portion 42 has the inclined surface 422 that is positioned on the first space S1 side and that is inclined such that the communication port 421 is at the bottom. Accordingly, the crushed piece M2 in the first space S1 can be smoothly guided to the communication port 421.

The humidified air exhaust space S3 is a space that communicates with the second space S2 and the exhaust port 413. The humidified air exhaust space S3 includes a space formed by the flow passage forming member 43. The flow passage forming member 43 is a member that couples through-holes 414 and 415 formed in the storage tank 41. The through-hole 414 is formed at a second space S2 side of a side wall of the storage tank 41, that is, below the partition portion 42, and the through-hole 415 is formed in the side wall of the storage tank above the first space S141. That is, the through-hole 414 and the through-hole 415 are formed in the side wall of the storage tank 41 to be arranged in this order from the lower side.

The flow passage forming member 43 is a member that hermetically covers a portion between the through-holes 414 and 415, among the through-holes 414 and 415 and the outer circumferential portion of the storage tank 41. Humidified air WA released to the second space S2 by the humidifying section 6 to be described later is used in humidifying the crushed piece M2 that is being stirred by the stirring section 5, but some of the humidified air WA enters the first space S1 through the communication port 421 and slightly humidifies the crushed piece M2 in the first space S1. Further, a surplus portion of the humidified air WA released to the second space S2 passes through the humidified air exhaust space S3 from the second space S2, further crosses an upper portion of the first space S1 from the left to the right, and is discharged from the exhaust port 413 to the outside of the storage tank 41.

It is preferable to adopt a configuration where when the surplus portion of the humidified air WA crosses the first space S1, the humidified air WA flows to avoid immediately below the introduction port 411, and in order to obtain this state, an auxiliary flow passage (not shown) or a bypass flow passage (not shown) may be provided at the upper portion of the storage tank 41.

In addition, a configuration where the surplus portion of the humidified air WA may be discharged to the outside of the storage tank 41 without crossing the first space S1 may be adopted. In this case, a configuration where the exhaust port 413 is provided in an upper end portion of the flow passage forming member 43, that is, a top surface of the storage tank 41 can be adopted.

In the present embodiment, the humidified air exhaust space S3 also communicates with the first space S1 on the upper side. Accordingly, the surplus portion of the humidified air WA that is moved from the second space S2 to the first space S1 via the communication port 421 is moved from the first space S1 to the humidified air exhaust space S3 and is discharged from the exhaust port 413.

As shown in FIGS. 2, 3, and 4, the stirring section 5 has the shaft 51, the first stirring member 52, and a second stirring member 53 (stirring member).

The shaft 51 has a rod shape extending in an up-down direction in FIG. 2, that is, a vertical direction from the bottom portion of the storage tank 41. The shaft 51 rotates around the central axis J1 along the vertical direction. An end portion of the shaft 51 on the lower side is coupled to the motor M. The shaft 51 rotates by the operation of the motor M. In the present embodiment, the motor M rotates in one direction, that is, an arrow direction in FIG. 2. Accordingly, the shaft 51 rotates clockwise in FIGS. 3 and 4. However, the disclosure is not limited to the configuration, and the shaft 51 may be configured to be rotatable in either a forward or reverse direction.

A speed reducer may be installed between the motor M and the shaft 51. The motor M is electrically coupled to the control section 281 of the control device 28 shown in FIG. 1, and an energization condition is controlled by the control section 281. Accordingly, the shaft 51 rotates at a predetermined timing and a predetermined rotation speed.

As shown in FIG. 2, the shaft 51 is inserted through the communication port 421 of the partition portion 42. An upper end portion of the shaft 51 is positioned in the first space S1. The first stirring member 52 is provided at an outer circumferential portion of the shaft 51 in the first space S1, and the second stirring member 53 is provided at the outer circumferential portion of the shaft 51 in the second space S2.

As shown in FIG. 3, the first stirring member 52 stirs the crushed piece M2 in the first space S1 by rotating together with the shaft 51. The first stirring member 52 has a plate shape, particularly a strip shape, in which a circumferential direction of the shaft 51 is a thickness direction. A plurality of, in the present embodiment, four first stirring members 52 are provided at equal intervals (equal angular intervals). However, the disclosure is not limited to the configuration, and the first stirring member 52 may have a rod shape. In addition, the number of installations is also not limited to four and may be one to three or five or more. In addition, the respective first stirring members 52 may not be disposed at equal intervals.

As the first stirring member 52 stirs the crushed piece M2 in the first space S1, the crushed piece M2 is loosened, and the entanglement of each sheet can be unraveled. The crushed piece M2 broken in such a manner can smoothly move to the second space S2 via the communication port 421.

As shown in FIG. 4, the second stirring member 53 stirs the crushed piece M2 in the second space S2 by rotating together with the shaft 51. The second stirring member 53 is disposed at a position shifted to a bottom portion side of the storage tank 41. The second stirring member 53 has a plate shape, particularly a strip shape, in which the circumferential direction of the shaft 51 is the thickness direction. A plurality of, in the present embodiment, four second stirring members 53 are provided at equal intervals (equal angular intervals). However, the disclosure is not limited to the configuration, and the second stirring member 53 may have a rod shape. In addition, the number of installations is also not limited to four and may be one to three or five or more. In addition, the respective second stirring members 53 may not be disposed at equal intervals.

In the second space S2, as the second stirring member 53 rotates around the central axis J1 and stirs the crushed piece M2, the crushed piece M2 is loosened, and the entanglement of each sheet can be unraveled. In addition, as shown in FIGS. 4 and 6, the second stirring member 53 can push out the crushed piece M2 forward in a rotation direction of the shaft 51. Accordingly, the crushed piece M2 can be smoothly discharged from the discharge port 412.

In addition, in the present embodiment, the first stirring member 52 and the second stirring member 53 can stir by collectively rotating in response to the rotation of the shaft 51. Accordingly, the discharge of the crushed piece M2 from the second space S2 by the second stirring member 53 and the movement (replenishment) of the crushed piece M2 to the second space S2 by the first stirring member 52 can be collectively performed by one power mechanism.

However, the disclosure is not limited to the configuration, and the first stirring member 52 and the second stirring member 53 may be configured to rotate independently of each other.

The crushed piece supply device 3 includes the partition portion 42 that partitions the internal space S0 into the first space S1 and the second space S2 positioned below the first space S1, and the second stirring member 53, which is the stirring member, is provided in the second space S2 and stirs the crushed piece M2 moved from the first space S1 to the second space S2. Accordingly, in a state where the entanglement of the crushed piece M2 in the second space S2 is loosened, the crushed piece M2 can be smoothly discharged from the crushed piece supply device 3.

The second stirring member 53, which is the stirring member, is installed at the bottom portion of the storage tank 41 and rotates in one direction around the central axis J1 along the vertical direction. Accordingly, the crushed piece M2 in the internal space S0, particularly in the second space S2 can be stably discharged from the crushed piece supply device 3.

The stirring section 5 is disposed at the outer circumferential portion of the shaft 51 in the second space S2 and has a plurality of (in the present embodiment, four) second stirring members 53 that rotate together with the shaft 51. Accordingly, the crushed piece M2 in the second space S2 can be well stirred.

The humidifying section 6 has a humidified air supply source 61, a humidified air release port 62, a humidified air supply passage 63, an air blowing fan 64, and a valve 65. The humidifying section 6 humidifies the crushed piece M2 in the internal space S0, particularly, the crushed piece M2 in the second space S2. Accordingly, an electrostatic force can prevent the crushed pieces M2 from being entangled with each other or the crushed pieces M2 from adhering to each part in the storage tank 41. Accordingly, the crushed piece M2 can be smoothly and stably discharged from the discharge port 412, and the subsequent processing, for example, the defibration processing and the next step, such as quantitative supply, can be appropriately and well performed.

As described above, the crushed piece supply device 3 includes the humidifying section 6 that humidifies the crushed piece M2 in the storage tank 41, particularly the crushed piece M2 in the second space S2. Accordingly, the crushed piece M2 in the internal space S0, particularly in the second space S2 can be efficiently humidified. As a result, the entanglement of the crushed pieces M2 with each other and the adhesion of the crushed pieces M2 to the inside of the device caused by an electrostatic force can be effectively prevented.

The humidified air supply source 61 shown in FIG. 2 generates the humidified air WA. The humidified air supply source 61 generates the humidified air WA through, for example, a vaporization method or an ultrasonic method. When a power supply (a main power supply, the same applies hereinafter) of the fiber structure manufacturing apparatus 100 is turned off, the humidified air supply source 61 stops the generation of the humidified air WA, and when the power supply of the fiber structure manufacturing apparatus 100 is turned on, the humidified air supply source 61 starts the generation of the humidified air WA.

In the middle of the humidified air supply passage 63, the air blowing fan 64 that blows the humidified air WA toward the humidified air release port 62 and the valve 65 that adjusts the flow rate of the humidified air WA are installed. The humidified air WA generated by the humidified air supply source 61 is transferred to each humidified air release port 62 through the humidified air supply passage 63 by the operation of the air blowing fan 64 and is released.

The air blowing fan 64 is configured as, for example, a blower, and the valve 65 is configured as, for example, an electromagnetic valve having a variable opening degree.

Each of the humidified air supply source 61, the air blowing fan 64, and the valve 65 is electrically coupled to the control section 281 of the control device 28 shown in FIG. 1, and the energization condition is controlled by the control section 281. Accordingly, the humidified air WA is released from the humidified air release port 62 at a predetermined timing, a predetermined humidity, and a predetermined flow rate and is supplied to the crushed piece M2.

The humidifying section 6 may have a configuration of not having any one or both of the air blowing fan 64 and the valve 65.

The humidified air release port 62 is provided in the second stirring member 53 and releases the humidified air WA toward the crushed piece M2 stirred by the second stirring member 53. More specifically, the humidified air release port 62 is provided in each of the four second stirring members 53. Accordingly, the humidified air WA can be evenly and uniformly supplied to the crushed piece M2 stirred by each of the second stirring members 53. Accordingly, the crushed piece M2 in the second space S2 can be humidified uniformly, efficiently, and quickly.

In particular, when the power supply of the fiber structure manufacturing apparatus 100 in a stopped state is turned on, it is necessary to quickly humidify the dry crushed piece M2. In the crushed piece supply device 3, since the crushed piece M2 can be directly humidified by the above configuration, the crushed piece M2 can be efficiently and quickly humidified, and the humidified crushed piece M2 can be quickly discharged. As a result, the sheet S can be quickly started to be manufactured after the power supply of the fiber structure manufacturing apparatus 100 is turned on, and the quality of the manufactured sheet S also improves.

As shown in FIGS. 4 and 6, each of the second stirring members 53 presses and stirs the crushed piece M2 on the surface in front in the rotation direction. The humidified air release port 62 is provided on a rear side of each second stirring member 53 in the rotation direction and releases the humidified air WA toward the crushed piece M2 pressed by the adjacent second stirring member 53 at the rear in the rotation direction. Accordingly, the crushed piece M2 that is stirred and loosened can be supplied with the humidified air WA and can be humidified as the humidified air release port 62 is prevented from being blocked by the crushed piece M2. Accordingly, the crushed piece M2 can be more uniformly humidified without unevenness.

As described above, the humidified air release port 62 is provided on the rear side of the second stirring member 53, which is the stirring member, in the rotation direction. Accordingly, the crushed piece M2 can be more uniformly humidified without unevenness. The installation location of the humidified air release port 62 is not limited to the shown configuration, and the humidified air release port 62 may be provided, for example, on a front side of the second stirring member 53 in the rotation direction or may be provided on an upper surface side of the second stirring member 53.

In addition, as shown in FIG. 6, the humidified air release port 62 is provided with a mesh member 621 which is a filter for preventing the entry of the crushed piece M2. Accordingly, the humidified air WA can be released from the humidified air release port 62, but the entry of the crushed piece M2 into the second stirring member 53 via the humidified air release port 62 can be prevented or suppressed.

As shown in FIGS. 2 and 5, the humidified air WA generated by the humidified air supply source 61 is transferred to the humidified air release port 62 via the humidified air supply passage 63 and is released toward the crushed piece M2 that is being stirred by the second stirring member 53.

The humidified air supply source 61 and the storage tank 41 are coupled to each other by a transfer pipe 44. A lumen portion 441 of the transfer pipe 44 constitutes a part of the humidified air supply passage 63. One end portion of the transfer pipe 44 is coupled to the humidified air supply source 61, and the other end portion is coupled to the through-hole 416 provided in the bottom portion of the storage tank 41.

In addition, as shown in FIG. 5, the shaft 51 has a lumen portion 511. The lumen portion 511 communicates with the through-hole 416. In addition, each of the second stirring members 53 has a lumen portion 531 that communicates with the lumen portion 511 of the shaft 51. The lumen portion 531 communicates with the humidified air release port 62. Accordingly, the humidified air WA passes through the lumen portion 441 of the transfer pipe 44, the lumen portion 511 of the shaft 51, and the lumen portion 531 of each second stirring member 53 in turn and is released from the humidified air release port 62. That is, the humidified air supply passage 63 is configured by the lumen portion 441 of the transfer pipe 44, the lumen portion 511 of the shaft 51, and the lumen portion 531 of the second stirring member 53.

As described above, the stirring section 5 has the shaft 51 and the second stirring members 53 which are the plurality of stirring members disposed at equal intervals at the outer circumferential portion of the shaft 51, and the humidified air supply passage 63 is provided inside the shaft 51 and inside the second stirring member 53. In other words, components of the humidifying section 6 partially overlap components of the stirring section 5. Accordingly, the device configuration can be simplified.

It is needless to say that in the present disclosure, the humidified air supply passage 63 may be provided independently of the shaft 51.

In addition, as shown in FIG. 5, a backflow preventing wall 512 is provided in the lumen portion 511 of the shaft 51. The backflow preventing wall 512 has a function of preventing the crushed piece M2 from blocking the through-hole 416 even when the crushed piece M2 enters the shaft 51. The backflow preventing wall 512 has a tubular shape provided outside the through-hole 416. The backflow preventing wall 512 has a shape (truncated conical shape) of which the outer diameter and the inner diameter are reduced as going upward. Accordingly, the crushed piece M2 can be more reliably prevented from blocking the through-hole 416.

As described above, the crushed piece supply device 3 includes the storage tank 41 that stores the crushed piece M2 containing fibers and that has the first space S1 and the second space S2 positioned below the first space S1 therein, the introduction port 411 that communicates with the first space S1 and through which the crushed piece M2 is introduced into the first space S1, the partition portion 42 that partitions the inside of the storage tank 41 into the first space S1 and the second space S2 and that has the communication port 421 which makes the first space S1 and the second space S2 communicate with each other, the adjusting section 7 that adjusts the moving amount of the crushed piece M2 moved from the first space S1 to the second space S2 via the communication port 421, the stirring section 5 that stirs the crushed piece M2 inside the second space S2, and the discharge port 412 through which the crushed piece M2 stirred by the stirring section 5 is discharged from the second space S2. Accordingly, processing such as stirring, discharging, and humidifying of the crushed piece M2 can be performed well and quickly.

In addition, the fiber structure manufacturing apparatus 100 includes the crushed piece supply device 3, the defibrating device 13 that is a defibrating section which defibrates the crushed piece M2 supplied from the crushed piece supply device 3 to generate the defibrated material M3, the second web forming section 19 that is an accumulating section which accumulates the defibrated material M3 to generate the second web M8, which is the accumulated material, and the molding section 20 that molds the second web M8. Accordingly, the fiber structure (sheet S) can be manufactured using the crushed piece M2 that is processed well and quickly in the crushed piece supply device 3. Accordingly, the quality of the fiber structure (sheet S) can be improved, and the yield can be improved.

The adjusting section 7 has the shaft 51 that is inserted into the communication port 421 and that rotates and the plurality of first stirring members 52 that are disposed at the outer circumferential portion of the shaft 51 in the first space S1 and that rotate together with the shaft 51. Accordingly, the moving amount of the crushed piece M2 from the first space S1 to the second space S2 can be adjusted by a simple configuration of rotating the shaft 51.

In the present embodiment, the humidified air release port 62 of the humidifying section 6 is provided in the second stirring member 53. However, without being limited thereto, the humidified air release port 62 may be provided at a location other than the second stirring member 53, for example, a side surface of the shaft 51, the first stirring member 52, a side wall portion of the storage tank 41, and the like. In addition, the humidifying section 6 may not be installed at the crushed piece supply device 3 itself.

As shown in FIGS. 2 and 3, the adjusting section 7 is configured by the shaft 51 and the first stirring member 52. That is, the shaft 51 and the first stirring member 52 of the stirring section 5 also belong to the adjusting section 7. As described above, the crushed piece M2 is loosened by rotating the first stirring member 52, and the entanglement of each sheet can be unraveled. Accordingly, the broken crushed piece M2 can be smoothly moved to the second space S2 via the communication port 421. In addition, the moving amount of the crushed piece M2 moved to the second space S2 via the communication port 421 per section time can be adjusted according to the rotation speed of the first stirring member 52.

When the rotation speed of the first stirring member 52 is increased, the moving amount of the crushed piece M2 increases, and when the rotation speed of the first stirring member 52 is decreased, the moving amount of the crushed piece M2 decreases. A configuration where the rotation speed of the first stirring member 52 is variable during rotation may be adopted, or a configuration where the first stirring member 52 rotates at a rotation speed determined in advance at all times may be adopted.

In particular, as the internal space S0 is partitioned into the first space S1 and the second space S2 with the partition portion 42, the crushed piece M2 can be divided and stored in each of the first space S1 and the second space S2. Accordingly, a configuration where the crushed piece M2 immediately before being discharged, that is, the crushed piece M2 in the second space S2 is stirred and discharged can be adopted. Therefore, the stirring can be performed uniformly, well, and quickly compared to a configuration where the entire amount of the crushed piece M2 in the internal space S0 is stirred. As a result, the crushed piece M2, which is appropriately stirred and humidified, can be quickly discharged and supplied to the next step.

In addition, when humidifying the dry crushed piece M2 by turning on the power supply of the fiber structure manufacturing apparatus 100 in the stopped state, a configuration where the crushed piece M2 in the second space S2 is preferentially humidified can be adopted. That is, the relatively small number of crushed pieces M2 can be humidified and discharged from the storage tank 41. As a result, the crushed pieces M2 can be humidified more quickly and well. As described above, as the internal space S0 is partitioned into the first space S1 and the second space S2 with the partition portion 42, processing such as stirring, discharging, and humidifying can be performed uniformly, well, and quickly.

In the present embodiment, the first stirring member 52 and the second stirring member 53 are configured to rotate in synchronization with each other by the rotation of the shaft 51. Accordingly, the discharge of the crushed piece M2 in the second space S2 from the discharge port 412 and the movement of the crushed piece M2 from the first space S1 to the second space S2 can be performed collectively. Therefore, the amount of the crushed piece M2 in the second space S2 can be maintained at a desired amount. As a result, the crushed piece M2 can be stably humidified and discharged.

In the present embodiment, the internal space S0 of the storage tank 41 has the first space S1 and the second space S2 partitioned with the partition portion 42, but without being limited thereto, the storage tank 41 may have one internal space S0. That is, the crushed piece supply device 3 may have a configuration of not having the partition portion 42 or a configuration of not having the adjusting section 7.

Although the crushed piece supply device and the fiber structure manufacturing apparatus of the present disclosure are described hereinbefore with reference to the shown embodiment, the present disclosure is not limited thereto, and each of sections constituting the crushed piece supply device and the fiber structure manufacturing apparatus can be replaced with a section having any configuration that can exhibit the same function. In addition, any component may be added to the crushed piece supply device and the fiber structure manufacturing apparatus.

In addition, in the fiber structure manufacturing apparatus, the raw material supply section 11 and the crushing section 12 may be omitted.

## Claims

1. A crushed piece supply device comprising:
a storage tank that stores a crushed piece containing a fiber;
a partition portion that partitions an inside of the storage tank into a first space and a second space positioned below the first space by narrowing the inside of the storage tank;
an adjusting section that adjusts a moving amount of the crushed piece moving from the first space to the second space;
a stirring section that stirs the crushed piece in the second space; and
a discharge port through which the crushed piece is discharged from the second space.

2. The crushed piece supply device according to claim 1, wherein
the adjusting section has a rotating shaft and a first stirring member that is disposed at an outer circumferential portion of the shaft in the first space and that rotates together with the shaft.

3. The crushed piece supply device according to claim 2, wherein
the stirring section has a second stirring member that is disposed at the outer circumferential portion of the shaft in the second space and that rotates together with the shaft.

4. The crushed piece supply device according to claim 1, wherein
the partition portion makes the first space and the second space communicate with each other with a hole having a cross-sectional area on a first space side larger than a cross-sectional area on a second space side.

5. The crushed piece supply device according to claim 1, further comprising:
a humidifying section that humidifies the crushed piece in the storage tank.

6. The crushed piece supply device according to claim 1, wherein
the discharge port is provided in a bottom portion of the storage tank.

7. A fiber structure manufacturing apparatus comprising:
the crushed piece supply device according to claim 1;
a defibrating section that defibrates the crushed piece supplied from the crushed piece supply device to generate a defibrated material;
an accumulating section that accumulates the defibrated material to generate an accumulated material; and
a molding section that molds the accumulated material.
